# EUROPÄISCHE PATENTSCHRIFT

(11) **EP 2 076 420 B1**
(45) Veröffentlichungstag und Bekanntmachung des Hinweises auf die Patenterteilung: **16.03.2016**
(21) Anmeldenummer: 07802718.2
(22) Anmeldetag: 20.08.2007
(51) Int. Cl.: B62D 15/02

(54) **VERFAHREN ZUM AUTOMATISCHEN STEUERN EINES FAHRZEUGS**
METHOD FOR AUTOMATICALLY CONTROLLING A VEHICLE
PROCÉDÉ DE COMMANDE AUTOMATIQUE D'UN VÉHICULE

(30) Priorität: 05.10.2006 DE 102006047131
(43) Veröffentlichungstag der Anmeldung: 08.07.2009
(73) Patentinhaber: Robert Bosch GmbH, 70442 Stuttgart (DE)
(72) Erfinder: BECKER, Jan-Carsten, 34246 Vellmar (DE)
(86) Internationale Anmeldenummer: PCT/EP2007/058619
(87) Internationale Veröffentlichungsnummer: WO 2008/040595

(56) Entgegenhaltungen:
- EP-A- 1 470 958
- WO-A-2005/080133
- WO-A-2006/042512
- DE-A1- 10 128 792
- DE-A1-102004 047 130
- US-A1- 2004 158 355
- US-A1- 2004 193 374

## Beschreibung

Die Erfindung betrifft ein Verfahren und eine Einrichtung zum automatischen Steuern eines Fahrzeugs sowie ein Computerprogramm und ein Computerprogrammprodukt.

### Stand der Technik

Ein Ziel bei der Entwicklung neuer Fahrzeuge ist die stetige Verbesserung der Sicherheit. Wurde dies in der Vergangenheit im wesentlichen über passive Maßnahmen, wie z. B. Sicherheitsgurte, Knautschzonen oder Airbags, erreicht, so liegen die jüngsten Verbesserungen im Bereich der aktiven Sicherheit. Bspw. verhindert das ABS ein Blockieren der Räder bei Vollbremsungen und gewährleistet somit jederzeit die Lenkbarkeit. Das ESP stabilisiert das Fahrzeug auch im fahrdynamischen Grenzbereich. Mit Hilfe der ASR kann ein Durchdrehen der Räder vermieden werden. Um eine weitere Erhöhung der Sicherheit zu erreichen, wird verstärkt versucht, durch eine das Umfeld wahrnehmende Sensorik bestimmte gefährliche Fahrsituationen frühzeitig zu erkennen und entsprechend vorbeugend zu reagieren.

Aus der Informatik und Robotik sind seit längerem Verfahren zur Sensorsignalverarbeitung für Systeme zur Umgebungserfassung von Robotern bekannt. Hierbei wird der Detektionsbereich der Sensoren in eine vorgegebene Anzahl von Feldern aufgeteilt. Für jedes Feld wird ein Wahrscheinlichkeitswert als Maß für das Vorhandensein des Hindernisses in dem jeweiligen Feld bestimmt. Derartige Verfahren sind unter den Begriffen Occupancy Grids oder Belief Grids oder Evidence Grids bekannt.

Seit kurzem werden diese Verfahren bzw. Varianten dieser Verfahren auch im Bereich der Fahrerassistenzsysteme für Kraftfahrzeuge bei Herstellern von Originalausstattungsteilen (OEMs) bzw. deren Forschungspartnern und Forschungseinrichtungen angewendet.

Eine Erfassungsvorrichtung und ein Sicherheitssystem für ein Kraftfahrzeug werden in der Druckschrift DE 10 2004 007 553 A1 beschrieben. Darin wird vorgeschlagen, auf das Vorhandensein von Hindernissen im Umgebungsbereich des Kraftfahrzeugs zu schließen, indem der Wahrscheinlichkeitswert jedes Feldes mit einem vorgegebenen Wahrscheinlichkeitsschwellwert verglichen wird. Wenn der Wahrscheinlichkeitswert des Feldes größer als der vorgegebene Wahrscheinlichkeitsschwellwert ist, wird auf das Vorhandensein eines Hindernisses in diesem Feld geschlossen.

Ein Verfahren zum Auslösen und Durchführen einer Verzögerung eines Fahrzeugs ist in der Druckschrift WO 03/006291 A1 beschrieben. Es ist vorgesehen, dass im Fall einer gefährlichen Situation ein Brems- oder Lenkeingriff oder eine Kombination aus beiden automatisch durchgeführt wird, um eine Kollision zu vermeiden oder mögliche Kollisionsfolgen zu mindern. Dies erfolgt unter Berücksichtigung sensorerfasster Objeke.

In der Druckschrift EP 1 387 183 A1 wird dazu ergänzend ein Verfahren zur Erkennung des Bevorstehens einer unausweichbaren Kollision vorgestellt. Mit Hilfe von erreichbaren möglichen Aufenthaltspunkten von beteiligten Objekte lassen sich Gebiete beschreiben und gegeneinander betrachten, so dass ein Verschwinden eines Gebiets von Aufenthaltspunkten eines Objekts auf eine Unvermeidbarkeit der bevorstehenden Kollision schließen lässt.

Aus der Druckschrift DE 10 2004 045 606 A1 ist ein Verfahren zur Beeinflussung der Fahrtrajektorien von Automobilen bekannt. Im wesentlichen soll dabei das Automobil auf eine bestimmte, vorher berechnete Trajektorie geführt werden, so dass bestimmte Manöver reproduzierbar gefahren werden können. Dabei wird insbesondere als Anwendungsfeld die Durchführung von Crash-Tests genannt, es soll aber auch zur koordinierten Fahrt zweier Verkehrsteilnehmer genutzt werden, um statt einer gezielt herbeigeführten Kollision diese genau zu vermeiden. Die benötigten Informationen stammen dabei von einem externen Koordinator oder von dem anderen beteiligten Fahrzeug durch leitungsgebundene oder -ungebundene Übertragungsmittel. Die hier benötigten Informationen werden nicht durch eine entsprechende eigene Umfeldsensorik und ein entsprechendes Situationsverständnis sondern direkt vom anderen Verkehrsteilnehmer bereitgestellt.

Ein Lenksystem für Kraftfahrzeuge ist in der Druckschrift EP 970875 A beschrieben. Mit diesem Lenksystem soll eine Kollision zwischen einem mit dem Lenksystem ausgestatteten Fahrzeug und einem Hindernis durch einen geeigneten Lenkeingriff vermieden werden. Das Lenksystem umfasst eine Regel- und Steueranordnung, mit der bei Betrieb des Fahrzeugs Soll- und Ist-Lenkwinkel geregelt und gesteuert werden.

In der Druckschrift JP 2000 302057 A wird ein Verfahren für ein Fahrzeug beschrieben, das im Fall eines vorhandenen Hindernisses verschiedene Lösungsstrategien bewertet, was zu einem Brems- und/oder Lenkeingriff führen kann.

Ein Verfahren und eine Vorrichtung zur Prädiktion von Bewegungstrajektorien von Objekten sind in der Druckschrift DE 102 31 556 A1 offenbart. Hierbei werden nur Brems- und Ausweichtrajektorien berücksichtigt, die das Fahrzeug an die fahrdynamische Grenze führen. Durch eine Umfeldsensorik werden Bewegungen beteiligter Objekte erkannt und deren Trajektorien prädiziert. Anhand dieser prädizierten Objekttrajektorien lässt sich dann ein bestmöglich deeskalierender Systemeingriff berechnen.

In der Druckschrift EP 1 251 060 A2 ist ein Verfahren zur Fahrzeugkontrolle offengelegt, das den Fahrer beim Ausweichen unterstützen soll, sobald erkannt wird, dass eine alleinige Bremsreaktion zur Kollisionsvermeidung nicht mehr ausreichend ist. Dazu werden im Falle eines erkannten kollisionsvermeidenden Ausweichmanövers die Lenkeigenschaften des Fahrzeugs verändert. Dies wird im wesentlichen durch die Ansteuerung einer Hinterradlenkung und durch ein Aufbringen von Bremsmomenten erreicht.

Aus der Druckschrift US 2004/0193374 A1 ist eine Vorgehensweise zur Vermeidung einer Kollision durch aktives Lenken und Bremsen für ein Fahrzeug bekannt. Hierbei wird ein erster Abstand zu einem Hindernis bestimmt, wobei innerhalb dieses ersten Abstands eine Vermeidung der Kollision durch Bremsen möglich ist. Weiterhin wird ein zweiter Abstand bestimmt, innerhalb dem eine Kollision durch kombiniertes Bremsen und Steuern um das Hindernis herum möglich ist. Hierzu sind zum Erfassen von Hindernissen verschiedene Sensoren bzw. Kameras vorgesehen. Dabei sind erste Sensoren an einer Vorderseite des Fahrzeugs angeordnet und zum Erfassen des Bereichs vor dem Fahrzeug ausgebildet. An der Seite des Fahrzeugs angeordnete Sensoren sind zum Erfassen des Bereichs neben dem Fahrzeug ausgebildet.

### Offenbarung der Erfindung

Bei dem erfindungsgemäßen Verfahren zum automatischen Steuern eines Fahrzeugs werden zur Bereitstellung einer Ausweichtrajektorie des Fahrzeugs vor einem Hindernis Informationen über mindestens eine durch das Fahrzeug frei befahrbare Fläche berücksichtigt. Bei einer Ausführungsform des Verfahrens wird zyklisch eine Trajektorie, die von dem Fahrzeug abgefahren wird, prädiziert bzw. vorhergesagte. Darauf basierend wird das Verfahren nur dann durchgeführt, wenn das Fahrzeug bei einer aktuellen und somit zyklisch prädizierten Trajektorie auf ein erkanntes Hindernis zusteuert und die als frei befahrbar erkannte Fläche abfahrbar ist. Erfindungsgemäß ist es vorgesehen, dass die Daten nur zum Erkennen von Hindernissen von mindestens einem ersten Sensor des Fahrzeugs, in der Regel einem Radar-, Video- oder Lidarsensor, und die Daten zum expliziten Erkennen von frei befahrbaren Flächen von mindestens einem zweiten Sensor des Fahrzeugs, in der Regel einem Video- oder Lidarsensor, bereitgestellt werden.

Erfindungsgemäß ist es vorgesehen, dass das Fahrzeug zum Ausweichen vor dem Hindernis derart gesteuert wird, dass die Ausweichtrajektorie für ein Ausweichmanöver des Fahrzeugs durch die als frei befahrbar erkannte Fläche verläuft. Demnach wird das Fahrzeug entlang einer von Hindernissen freien Strecke gesteuert und insbesondere gelenkt, wobei das Fahrzeug durch geeignete Lenk- sowie Brems- bzw. Beschleunigungsmanöver derart gesteuert wird, dass eine Kollision mit dem Hindernis vermieden wird.

Als weitere Bedingung zur Ausführung des Verfahrens kann überprüft werden, ob eine Person, die das Fahrzeug steuert, dem Hindernis durch geeignete Steuerbefehle selbstständig ausweichen kann, diese Option ist bspw. unter Berücksichtigung einer Reaktionszeit, insbesondere der sog. Schrecksekunde, der Person realisierbar. Es ist zudem denkbar, hierbei zu berücksichtigen, in welchem insbesondere quantitativen Umfang derartige Steuerbefehle, bspw. Lenkbefehle, von der Person vorzunehmen sind.

In einer Ausgestaltung des Verfahrens werden Daten zum Erkennen von Hindernissen in einem Umfeld des Fahrzeugs und Daten zum Erkennen von frei befahrbaren Flächen in dem Umfeld gemeinsam verarbeitet und bedarfsweise fusioniert, so dass die zum Ausweichen geeignete, frei befahrbare Fläche bestimmt werden kann. Außerdem wird eine zellgitterbasierte Zerlegung des Umfelds durchgeführt. Dies bedeutet, dass das Umfeld des Fahrzeugs in ein Gitter aus Zellen aufgeteilt wird, so dass für jede Zelle darüber eine Aussage gemacht werden kann, ob diese Zelle nun durch ein Objekt oder Hindernis belegt oder frei ist. Aus mehreren zusammenhängenden freien Zellen kann dann eine frei befahrbare Fläche zusammengesetzt werden.

Die Erfindung betrifft des weiteren eine Einrichtung zum automatischen Steuern eines Fahrzeugs, gemäß dem unabhängigen Anspruch 7. Diese Einrichtung ist dazu ausgebildet, zur Bereitstellung einer Ausweichtrajektorie des Fahrzeugs vor einem Hindernis Informationen über mindestens eine durch das Fahrzeug frei befahrbare Fläche zu berücksichtigen.

Mit dieser Einrichtung, insbesondere mit Modulen dieser Einrichtung, wie bspw. Sensoren oder einem Verarbeitungsmodul zur Verarbeitung von Sensordaten und Bereitstellung der Ausweichtrajektorie, sind zumindest einzelne oder sämtliche Schritte des erfindungsgemäßen Verfahrens durchführbar. Die Einrichtung kann auch eine Ansteuerung oder ein Beaufschlagungsmodul aufweisen oder mit einem derartigen Beaufschlagungsmodul zusammenwirken, wobei dieses Beaufschlagungsmodul dazu vorgesehen ist, unter Berücksichtigung der Ausweichtrajektorie das Fahrzeug derart automatisch zu steuern, d. h. zu lenken oder zu bremsen bzw. zu beschleunigen, dass das Fahrzeug das Ausweichmanöver zur Bereitstellung der Ausweichtrajektorie durchführen kann.

Das erfindungsgemäße Computerprogramm mit Programmcodemitteln ist zur Durchführung aller Schritte eines erfindungsgemäßen Verfahrens geeignet, wenn das Computerprogramm auf einem Computer oder einer entsprechenden Recheneinheit, insbesondere in einer erfindungsgemäßen Einrichtung, ausgeführt wird.

Die Erfindung betrifft außerdem ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einer erfindungsgemäßen Einrichtung, ausgeführt wird.
Mit der vorliegenden Erfindung wird ein Sicherheits- und/oder Assistenzsystem für Kraftfahrzeuge zur Unfallvermeidung durch Ausweichen vor Hindernissen unter Berücksichtigung von Hindernis- und Befahrbarkeitsinformationen realisiert. Die bei der Einrichtung verwendeten Sensoren zur Umfelderfassung für Kraftfahrzeuge können neben Objekten, d. h. belegten und damit für die Fahrzeugführung nicht zur Verfügung stehenden Gebieten, auch freie, d. h. befahrbare, Flächen innerhalb freier Gebiete direkt erfassen.

Gegenüber den bisher bekannten Verfahren zur Unfallvermeidung durch Ausweichen ist der Vorteil dieses Verfahrens, dass ein ausweichender Eingriff in die Fahrzeugführung nur dann stattfindet, wenn die Ausweichtrajektorie auf einer als befahrbar erkannten Fläche abfahrbar ist. Damit wird das Risiko eines Fehleingriffs erheblich reduziert. Ein Ausweichmanöver findet nur dann statt, wenn die prädizierte, jeweils aktuelle Trajektorie des Fahrzeug auf einem Kollisionskurs liegt, d. h. ein durch die Umfeldwahrnehmung als belegt erkanntes Gebiet annähernd erreicht ist und es keine alternative Trajektorie mehr gibt, die die Kollision mit dem Hindernis vermeidet und die der Fahrer mit normalen komfortablen Steuerbefehlen oder Lenkeingriffen noch abfahren kann. Zudem ist vorgesehen, dass eine alternative Ausweichtrajektorie abfahrbar ist, so dass die Kollision dadurch vermieden werden kann, dass sie durch eine Freifläche, d. h. durch ein durch die Umfeldwahrnehmung als befahrbar erkanntes Gebiet, verläuft.

In Ausgestaltung der Erfindung können zellgitterbasierte Verfahren zur Verarbeitung von Sensorrohdaten eingesetzt werden. Zudem kann eine Multisensor-Datenfusion für aktive Fahrzeugsicherheitssysteme verwendet werden. Die Erfindung kann ebenfalls eine Verarbeitung von Radarspektren zu Radarortungen umfassen, wobei eine radarinterne Sensorsignalverarbeitung zur Verarbeitung von Radarspektren für Radarortungen erfolgt. Im Rahmen der Erfindung ist es möglich, eine Erzeugung von unterschiedlichen Objekthypothesen für Komfort- und Sicherheitsfunktionen in Fahrerassistenzsystemen, die auf einer zellgitterbasierten Umfeldmodellierung beruhen, bereitzustellen. Dabei werden mehrere unterschiedliche funktionsspezifische Schwellwerten in Abhängigkeit der unterschiedlichen Anforderungen an die Objekthypothese verschiedener Fahrerassistenzsysteme festgelegt.

In weiterer Ausgestaltung der Erfindung wird eine gemeinsame Verarbeitung und Fusion von Daten aus Objekt- und/oder Merkmalserkennung und Freiflächenerkennung mit der zellgitterbasierten Umfeldmodellierung für Fahrerassistenzsysteme und insbesondere für prädiktive Sicherheitssysteme verwendet. Dabei kann ein Umfeld des Fahrzeugs in einzelne Zellen zerlegt werden. Ein Ergebnis dabei ist eine Umfeldbeschreibung für Fahrerassistenzsysteme und insbesondere für prädiktive Sicherheitssysteme, die die Wahrscheinlichkeit für die Befahrbarkeit von Gebieten, die Wahrscheinlichkeit für die Nicht-Befahrbarkeit von Gebieten und eine verbleibende Unsicherheit abbildet. Die integrierte Verarbeitung und Beschreibung von befahrbaren und nicht-befahrbaren Flächen bietet, insbesondere beim Ausweichen vor Hindernissen, einen Nutzengewinn für Assistenzsysteme und insbesondere für Sicherheitssysteme.

Als der mindestens eine erste Sensor, insbesondere Radarsensor, zur Umfeldwahrnehmung für die Einrichtung und somit ein Fahrerassistenz- und Sicherheitssystem ist ein Fernbereichsradarsensor (Longe Range Radar, LRR) geeignet. Dieser Sensor misst die von einem Reflektor zurückgestreute Leistung einer ausgesendeten Welle. Daher detektiert der Sensor insbesondere gut reflektierende metallische Objekte wie Fahrzeuge aber ebenso bspw. Gullideckel oder metallisch beschichtete Lebensmittelverpackungen, die für die Fahrzeugführung in der Regel nicht relevant sind. Dieser Sensor kann jedoch nicht die räumliche Ausdehnung von Objekten detektieren, ebenso können keine freien Flächen detektiert werden.

Die Einrichtung kann als mindestens einen ersten und/oder zweiten Sensor einen Videosensor aufweisen, der mit einer Videokamera das Fahrzeugumfeld erfasst und die aufgenommenen Bilder mit einer entsprechenden Signalverarbeitung auswertet. Die für die Fahrzeugführung insbesondere interessanten kinematischen Größen Abstand und Geschwindigkeit werden hierbei indirekt gemessen. Videosensoren sind zur Vermessung von geometrischen Objekten wie Fahrbahnmarkierungen, die in der Regel bekannten Modellen folgen, gut geeignet. Insbesondere bei den für die Anwendung in Kraftfahrzeugen aus Kosten- und Handhabungsgründen besonders günstigen monoskopischen Verfahren ist eine direkte dreidimensionale Vermessung mit explizitem a-priori Wissen, bspw. durch Einsatz von Mustererkennung, möglich. Unbekannte Objekte werden damit mittelbar vermessen. Gerade durch die Möglichkeit der Erkennung von optischen Mustern besitzen Videosensoren ein besonders großes Potential. Hiermit kann mit einer gewissen Sicherheit auch die Straßenoberfläche bspw. durch die spezifische Textur als freie Fläche erkannt werden. Weiterhin kann bei Detektion eines Objekts oder Hindernisses durch das direkte optische Messverfahren mit einer gewissen Sicherheit darauf geschlossen werden, dass die Strecke bis zu diesem Objekt nicht belegt und somit frei ist.

Ein Lidarsensor kann ebenfalls als der mindestens eine erste und/oder zweite Sensor der Einrichtung vorgesehen sein. Der Lidarsensor ermittelt den Abstand zu einem reflektierenden Objekt direkt durch Messung der Laufzeit der ausgesendeten Welle. Aufgrund der Wellenlänge im Infrarot-Bereich ist eine gewisse Abhängigkeit der Erfassungsreichweite von den Umweltbedingungen gegeben. Zusätzlich hängt die Erfassungsreichweite von den Reflexionseigenschaften des zu detektierenden Ziels ab. Lidarsensoren mit feststehenden Strahlen sind relativ kostengünstig zu realisieren, scannende Lidarsensoren (Laserscanner) ermöglichen zumindest horizontal eine hohe Auflösung und einen großen Erfassungswinkel. Ebenso wie bei Videosensoren kann bei Detektion eines Objekts durch das direkte optische Messverfahren mit einer gewissen Sicherheit darauf geschlossen werden, dass die Strecke bis zu diesem Objekt nicht belegt und somit frei ist.

Im Bereich der Fahrerassistenzsysteme ist mit Adaptive Cruise Control (ACC) eine Komfortfunktion realisiert. Mit der Systemfamilie Predictive Safety Systems (PSS) sind zudem Sicherheitsfunktionen durchführbar. Während bei Komfortsystemen nur verhältnismäßig geringe Eingriffe in die Fahrzeugführung stattfinden, gehen bei Sicherheitssystemen die Eingriffe bis hin zu einer vollautomatischen Notbremsung mit maximaler Verzögerung. Mit der Erfindung können bei Komfortfunktionen und Sicherheitsfunktionen unterschiedliche Anforderungen an die Objekthypothesen der Umfeldwahrnehmung erfüllt werden. Insbesondere die sehr hohen Anforderungen an die Fehlauslöseraten bei Sicherheitssystemen und damit auch an die Signalverarbeitung der Umfeldwahrnehmung für solche Sicherheitssysteme sind mit der Erfindung zu handhaben.

Derzeitige Fahrerassistenz- und Sicherheitssysteme basieren i. d. R. auf einem Radarsensor. Der Radarsensor kann nur Objekte aber keine freien Flächen detektieren. Der zur Realisierung der Erfindung vorgesehene mindestens eine zweite Sensor kann auch explizit freie Flächen erfassen. Bei keiner der aus dem Stand der Technik bekannten Schriften werden im Unterschied zu der vorliegenden Erfindung bei einem Eingriff in die Fahrzeugführung Freiflächeninformationen berücksichtigt.

Mit der Erfindung werden Informationen über freie befahrbare Gebiete explizit berücksichtigt. Der ausweichende Eingriff in die Fahrzeugführung findet nur statt, wenn für das Ausweichmanöver die Ausweichtrajektorie bereitgestellt wird. Weiterhin lassen sich wesentlich größere Einsatzbereiche realisieren, als dies durch ausschließlich bremsende Systeme der Fall ist.

Gegenüber den aus dem Stand der Technik bekannten Verfahren zur Unfallvermeidung durch Ausweichen ist der Vorteil dieses Verfahrens, dass das Risiko eines Fehleingriffs dadurch erheblich reduziert wird, dass ein ausweichender Eingriff in die Fahrzeugführung, typischerweise in die Lenkung, nur dann stattfindet, wenn die Ausweichstrajektorie auf einer als befahrbar erkannten Fläche abfahrbar ist.

Das Ausweichmanöver findet in Ausgestaltung nur dann statt, wenn die prädizierte Trajektorie des Fahrzeug auf einem Kollisionskurs liegt, d. h. ein durch die Umfeldwahrnehmung als belegt erkanntes Gebiet weitgehend erreicht ist, und es keine Trajektorie mehr gibt, die die Kollision mit dem Hindernis vermeidet und die der Fahrer mit normalen komfortablen Lenkeingriffen noch abfahren kann. Demnach ist eine alternativ abfahrbare Trajektorie bekannt, durch die die Kollision dadurch vermieden werden kann, dass sie durch eine Freifläche verläuft, d. h. durch ein durch die Umfeldwahrnehmung als befahrbar erkanntes Gebiet verläuft.

Bei der erfindungsgemäßen Einrichtung ist mindestens ein erster Sensor zur Umfeldwahrnehmung in der Lage, innerhalb seines gegebenen Detektionsbereiches belegte, d. h. nichtbefahrbare Gebiete oder Bereiche zu detektieren und idealerweise auch darauf basierend die Wahrscheinlichkeit anzugeben, mit der diese Gebiete belegt sind. Dies kann bspw. ein objekterkennender Sensor (z. B. Radar, Video oder Lidar) sein. Dies kann weiterhin ein bereits existierender Sensor (z. B. LRR2) sein, der die Umfeldbeschreibung durch sogenannte Objektlisten oder durch Ortungslisten abstrahiert. Des weiteren ist mindestens ein zweiter Sensor zur Umfeldwahrnehmung in der Lage, Freiflächen, also nicht belegte d. h. befahrbare Gebiete, innerhalb seines gegebenen Detektionsbereiches zu erfassen und darauf basierend auch die Wahrscheinlichkeit anzugeben, mit der diese Gebiete frei sind. Dies muss nicht notwendigerweise ein getrenntes Sensorsystem sein. Es ist hierzu bspw. ein Einsatz eines Video- oder Lasersensors denkbar. Die Umfeldwahrnehmung lässt sich des weiteren auch durch einen Sensor bereitstellen, der durch einen im Videosensor ablaufenden Algorithmus zur Freiflächendetektion realisiert ist. Die Abhängigkeiten, die bspw. dadurch entstehen, dass der zwar getrennt laufende Algorithmus u. a. die gleiche Hardware zur Bilderfassung und damit dass gleiche Bild wie die Algorithmen zur Objekterkennung verwendet, sind in Wahrscheinlichkeitsattributen zu berücksichtigen, die bspw. durch Sensormodelle der benutzten Sensoren berechnet werden. Denkbar ist weiterhin auch ein Sensor, der Freiflächeninformationen aus Belegtheitsinformationen entsprechend seines Messprinzips ableitet.

Zur Umfeldmodellierung und/oder Sensordatenfusion können die Sensoren ihre Daten über Hindernisse und Freiflächen direkt an ein zur Berechnung von der Ausweichtrajektorie vorgesehenes Modul, bspw. ein Verarbeitungsmodul, und zum Auslösen oder Steuern des Ausweichmanövers vorgesehenes Modul, bspw. ein Ansteuerungs- oder Beaufschlagungsmodul, der Einrichtung senden.

Alternativ und/oder ergänzend können die Sensordaten über ein zentrales Modul zur Sensordatenfusion laufen, dies kann im Rahmen einer gemeinsamen Verarbeitung und Fusion von Daten aus Objekt- und/oder Merkmalserkennung und Freiflächenerkennung mit der zellgitterbasierten Umfeldmodellierung für Fahrerassistenzsysteme und insbesondere für prädiktive Sicherheitssysteme erfolgen. Ein Ergebnis ist die Umfeldbeschreibung für Fahrerassistenzsysteme und insbesondere für prädiktive Sicherheitssysteme, die die Wahrscheinlichkeit für die Befahrbarkeit von Gebieten, die Wahrscheinlichkeit für die Nicht-Befahrbarkeit von Gebieten und die verbleibende Unsicherheit abbildet. Für das Assistenzsystem kann der relevante bzw. der durch Umfeldsensorik erfasste Bereich des Fahrzeugumfeldes in eine vorgegebene Anzahl von n Zellen aufgeteilt werden. Für jede dieser n Zellen wird ein Attribut berechnet und abgespeichert, dass die Wahrscheinlichkeit Pᵢ(*belegt*) = Pᵢ(*b*) angibt, dass eine i-te Zelle durch ein für die Fahrzeugführung relevantes Objekt belegt und demnach nicht befahrbar ist. Weiterhin wird ein Attribut berechnet und abgespeichert, dass die Wahrscheinlichkeit Pᵢ (*frei*) = Pᵢ (*f*) angibt, dass die i-te Zelle nicht durch ein für die Fahrzeugführung relevantes Objekt belegt und somit befahrbar ist.

Dazu wird zyklisch die Trajektorie prädiziert, die das Fahrzeug abfahren wird, wenn der Fahrer das Fahrzeug führt. Hierzu werden bspw. bekannte fahrzeuginterne Daten für kinematische Größen, wie Geschwindigkeit, Beschleunigung, Lenkwinkel, Gierrate, Gierbeschleunigung usw., verwendet.

Wenn in einer Ausführungsform der Erfindung diese prädizierte Trajektorie auf einem Kollisionskurs mit einem erkannten Hindernis liegt, dann wird berechnet, ob es eine durch den Fahrer mit normalen Steuerbefehlen bzw. Lenkeingriffen (bspw. a_{quer,max} = 4m/s²) abfahrbare Trajektorie gibt, die die Kollision mit dem Hindernis vermeidet. Wenn es keine mit normalen Lenkeingriffen abfahrbare Trajektorie mehr gibt, dann wird berechnet, ob es eine mit den physikalisch maximal möglichen Lenkeingriffen abfahrbare Trajektorie gibt, die durch ein durch die Umfeldwahrnehmung als befahrbar erkanntes Gebiet verläuft. Ist dies der Fall, dann wird ein Ausweichmanöver auf dieser Trajektorie ausgelöst.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird im folgenden unter Bezugnahme auf die Zeichnung ausführlich beschrieben.
- Figur 1: zeigt Diagramme zu Beispielen von Zusammenhängen zwischen Brems- und Ausweichmanövern.
- Figur 2: zeigt ein Diagramm zu einer ersten Ausführungsform des erfindungsgemäßen Verfahrens.
- Figur 3: zeigt ein Diagramm zu einer zweiten Ausführungsform des erfindungsgemäßen Verfahrens inklusive einer Sensordatenfusion.
- Figur 4: zeigt in schematischer Darstellung eine Ausführungsform einer erfindungsgemäßen Einrichtung.

### Ausführungsformen der Erfindung

Die Figuren werden zusammenhängend und übergreifend beschrieben, gleiche Bezugszeichen bezeichnen gleiche Komponenten.

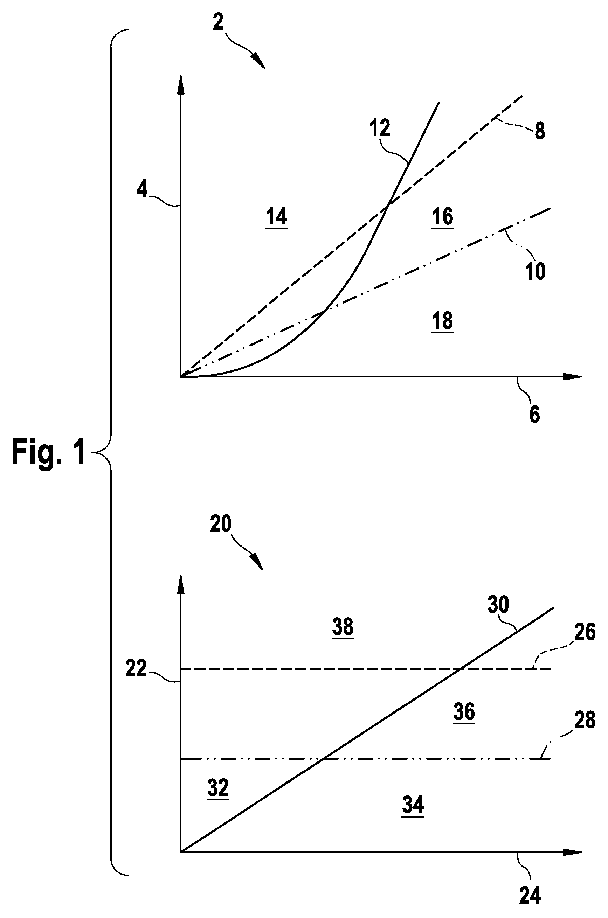

In einem ersten Diagramm 2 aus Figur 1 ist ein Abstand zwischen einem Fahrzeug und einem Hindernis entlang einer vertikal orientierten Achse 4 über einer Relativgeschwindigkeit entlang einer horizontal orientierten Achse 6 des Diagramms 2 aufgetragen. In diesem ersten Diagramm 2 kennzeichnet eine erste hier gestrichelte Gerade 8 einen Zustand, wonach eine letzte komfortable Ausweichmöglichkeit möglich ist. Eine zweite hier strichpunktierte Gerade 10 kennzeichnet einen Zustand, wonach eine letzte Ausweichmöglichkeit möglich ist. Eine letzte Bremsmöglichkeit ist durch die Kurve 12 gekennzeichnet. Somit ist in einem durch die vertikal orientierte Achse 4 für den Abstand, die erste Gerade 8 und die Kurve 12 begrenzten ersten Bereich 14 des Diagramms ein Bremsen oder Ausweichen möglich. Innerhalb eines zweiten Bereichs 16, der durch die Kurve 12 sowie die erste Gerade 8 und die zweite Gerade 10 begrenzt ist, ist ein hochdynamisches Ausweichen möglich. In einem dritten Bereich 18 des ersten Diagramms 2, der durch die zweite Gerade 10, die Kurve 12 sowie die horizontal orientierte Achse 6 für die Relativgeschwindigkeit begrenzt ist, ist eine Kollision nicht vermeidbar, allerdings können Unfallfolgen innerhalb dieses dritten Bereichs 18 gemindert werden.

In dem zweiten Diagramm 20 aus Figur 1 ist entlang einer vertikal orientierten Achse 22 ein Zeitraum bis zu einer Kollision zwischen dem Fahrzeug und dem Hindernis über der Relativgeschwindigkeit entlang einer horizontal orientierten Achse 24 aufgetragen. In diesem zweiten Diagramm 20 kennzeichnet eine erste gestrichelte Gerade 26 einen Zustand für eine letzte komfortable Ausweichmöglichkeit. Eine zweite strichpunktierte Gerade 28, die ebenfalls zu der horizontal orientierten Achse 24 parallel ist, kennzeichnet einen Zustand für eine letzte Ausweichmöglichkeit. Eine letzte Bremsmöglichkeit ist durch die dritte Gerade 30, die durch den Ursprung verläuft, begrenzt. In einem ersten Bereich 32 dieses zweiten Diagramms 20 ist eine Unfallvermeidung durch Bremsen möglich. Innerhalb eines zweiten Bereichs 34, der durch die horizontal orientierte Achse 24, die zweite Gerade 28 sowie die dritte Gerade 30 begrenzt ist, ist eine Kollision zwar nicht vermeidbar, jedoch können Unfallfolgen verringert werden. In einem dritten Bereich 36, der durch die drei Geraden 26, 28, 30 begrenzt ist, ist ein hochdynamisches Ausweichen möglich. In einem vierten Bereich 38, der durch die erste Gerade 26, die dritte Gerade 30 sowie die vertikal orientierte Achse 22 begrenzt ist, ist ein Bremsen oder Ausweichen möglich.

Figur 1 zeigt somit einen prinzipiellen Vergleich von spätest möglichen Aktionszeitpunkten zwischen Brems- und Ausweichmanövern. Es wird deutlich, dass alleine mit Bremseingriffen eine Unfallvermeidung nur bei niedrigen Relativgeschwindigkeiten möglich ist. Bei höheren Relativgeschwindigkeiten läßt sich durch Bremseingriffe nur eine Minderung der Unfallschwere erreichen. Weiterhin ist anhand von Figur 1 zu erkennen, dass gerade bei höheren Relativgeschwindigkeiten eine Unfallvermeidung durch hochdynamisches Ausweichen durchaus möglich ist.

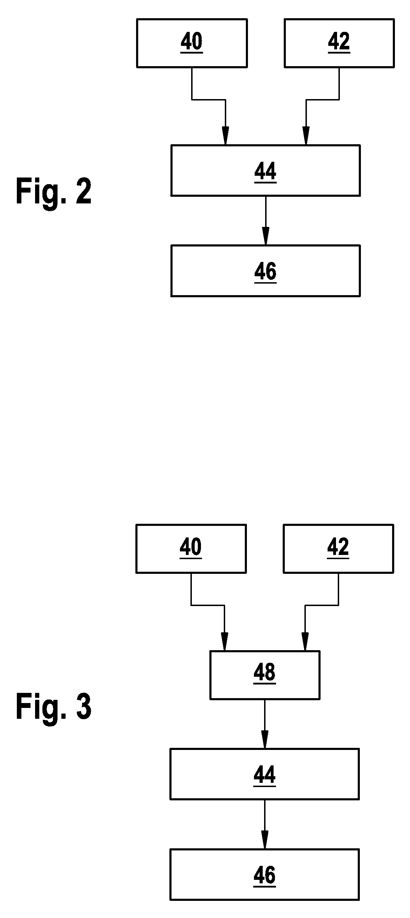

Figur 2 zeigt ein Diagramm bzw. Blockschaltbild zu einer ersten Ausführungsform des erfindungsgemäßen Verfahrens. Hierbei erfolgt durch mindestens einen ersten Sensor bei einer Hindernisdetektion 40 eine Detektion von Hindernissen. Zeitgleich zu dieser Hindernisdetektion 40 erfolgt bei einer Freiflächendetektion 42 durch mindestens einen zweiten Sensor eine Detektion von Freiflächen. Sensordaten, die jeweils bei der Hindernisdetektion 40 sowie der Freiflächendetektion 42 bereitgestellt werden, werden einer gemeinsamen Verarbeitung 44 übermittelt. Bei dieser gemeinsamen Verarbeitung 44 wird mindestens eine Ausweichtrajektorie für das Fahrzeug berechnet und in Abhängigkeit einer Realisierung der Ausweichtrajektorie ein Ausweichmanöver für das Fahrzeug ausgelöst. In Abhängigkeit eines bei dieser Verarbeitung 44 bereitgestellten Ergebnisses erfolgt eine Ansteuerung 46 einer Aktorik der Fahrzeugs, so dass das Ausweichmanöver unter Berücksichtigung einer frei befahrbaren Fläche durchgeführt wird.

Bei dem Diagramm zur zweiten Ausführungsform des erfindungsgemäßen Verfahrens aus Figur 3 ist in Ergänzung zu dem in Figur 2 vorgestellten Diagramm zusätzlich in einem Zwischenschritt eine Sensordatenfusion 48 jener Sensordaten vorgesehen, die bei der Hindernisdetektion 40 von dem mindestens einen ersten Sensor sowie bei der Freiflächendetektion 42 von dem mindestens einen zweiten Sensor bereitgestellt werden. Nach dieser Verarbeitung 44 werden die bereitgestellten Informationen, wie bereits anhand von Figur 2 verdeutlicht, der Ansteuerung 46 zugeführt.

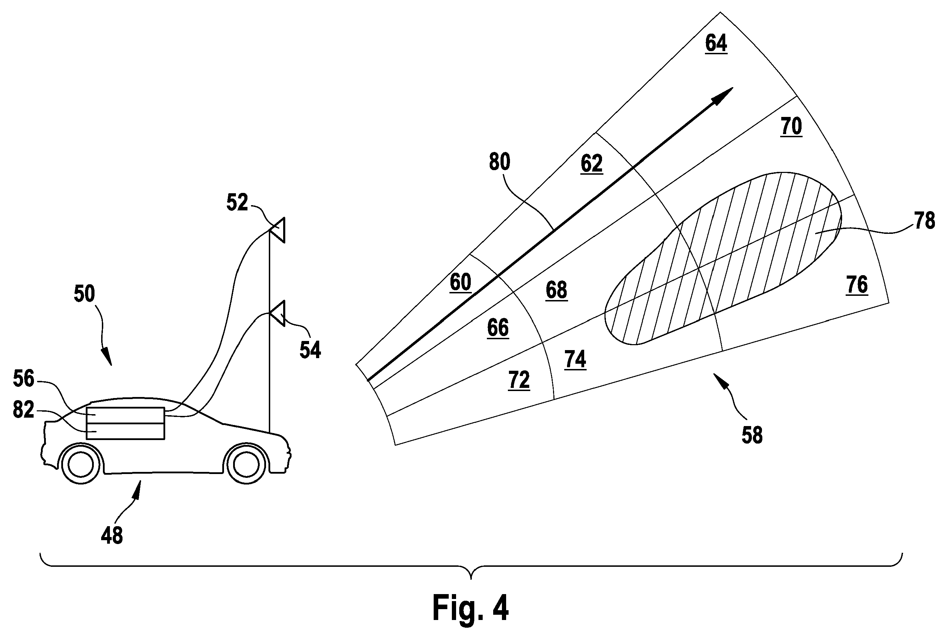

Figur 4 zeigt in schematischer Darstellung ein Fahrzeug 48, das eine schematisch dargestellte Ausführungsform einer erfindungsgemäßen Einrichtung 50 aufweist. Diese Ausführungsform der erfindungsgemäßen Einrichtung 50 umfasst einen ersten Sensor 52, einen zweiten Sensor 54 sowie ein Verarbeitungsmodul 56.

Die Darstellung zeigt ebenfalls in schematischer Darstellung ein Umfeld 58 des Fahrzeugs 48. Dieses Umfeld 58 ist in Zellen 60, 62, 64, 66, 68, 70, 72, 74, 76 aufgeteilt. Dabei ist vorgesehen, dass sich in den Zellen 68, 70, 74, 76 ein Hindernis 78 befindet. Die anderen Zellen 60, 62, 64, 66 und 72 sind in der vorliegenden Ausführungsform frei.

Zum Erkennen des Umfelds 58 ist vorgesehen, dass mit dem ersten Sensor 52 das Hindernis erkannt wird. Mit dem zweiten Sensor 54 werden freie Zellen 60, 62, 64, 66, 72 aus denen hier eine freie Fläche zusammengesetzt ist, erkannt. Daten zum Erkennen des Hindernisses 78, die von dem ersten Sensor 52 bereitgestellt werden, sowie Daten zum Erkennen von freien Zellen 62, 64, 66, 72, die mittels des zweiten Sensors 54 bereitgestellt werden, werden mit dem Verarbeitungsmodul 56 gemeinsam verarbeitet und in diesem Zusammenhang in der vorliegenden Ausführungsform auch fusioniert. Mit dem Verarbeitungsmodul 56 wird somit auf diesen bereitgestellten Daten basierend eine Ausweichtrajektorie 80 für eine frei befahrbare Fläche aus den freien Zellen 60, 62, 64, 66, 72 bereitgestellt, die von dem Fahrzeug 48 zu befahren ist, ohne dass es zu einer Kollision mit dem Hindernis 78 kommt.

Des weiteren wird durch ein Beaufschlagungsmodul 82 der Einrichtung 50 durch Ansteuerung einer Aktorik des Fahrzeugs 48 ein Ausweichmanöver für das Fahrzeug eingeleitet. Dabei steuert das Beaufschlagungsmodul 82 das Fahrzeug 48 mit geeigneten Steuerbefehlen, bspw. Lenksowie Brems- bzw. Beschleunigungsbefehlen, derart, dass das Fahrzeug 48 bei einer Weiterfahrt der Ausweichtrajektorie 80 folgend dem Hindernis 78 ausweicht, so dass eine Kollision mit dem Hindernis 78 vermieden wird.

## Patentansprüche

1. Verfahren zum automatischen Steuern eines Fahrzeugs (48), bei dem zur Bereitstellung einer Ausweichtrajektorie (80) des Fahrzeugs (48) vor einem Hindernis (78) Informationen über mindestens eine durch das Fahrzeug (48) frei befahrbare Fläche berücksichtigt werden,
**dadurch gekennzeichnet, dass**
Daten zum Erkennen von Hindernissen (78) in einem Umfeld (58) des Fahrzeugs (48) und Daten zum Erkennen von frei befahrbaren Flächen in dem Umfeld (58) gemeinsam verarbeitet werden, und somit die zum Ausweichen geeignete frei befahrbare Fläche bestimmt wird, und dass Daten nur zum Erkennen von Hindernissen (78) von mindestens einem ersten Sensor (52) des Fahrzeugs (48) und Daten zum expliziten Erkennen von frei befahrbaren Flächen von mindestens einem zweiten Sensor des Fahrzeugs (54) bereitgestellt werden, wobei das Fahrzeug (48) zum Ausweichen vor dem Hindernis (78) derart gesteuert wird, dass die Ausweichtrajektorie (80) des Fahrzeugs (48) durch die als frei befahrbar erkannte Fläche verläuft.

2. Verfahren nach Anspruch 1, bei dem zyklisch eine Trajektorie, die von dem Fahrzeug (48) abgefahren wird, prädiziert wird.

3. Verfahren nach Anspruch 2, das nur dann durchgeführt wird, wenn das Fahrzeug (48) bei der prädizierten Trajektorie auf ein erkanntes Hindernis (78) zusteuert und die als frei befahrbar erkannte Fläche abfahrbar ist.

4. Verfahren nach einem der voranstehenden Ansprüche, bei dem überprüft wird, ob eine Person, die das Fahrzeug (48) steuert, dem Hindernis (78) durch geeignete Steuerbefehle ausweichen kann.

5. Verfahren nach Anspruch 1, bei dem eine zellgitterbasierte Zerlegung des Umfelds (58) durchgeführt wird.

6. Verfahren nach einem der voranstehenden Ansprüche, bei dem eine Umfeldbeschreibung, die eine Wahrscheinlichkeit für eine Befahrbarkeit von Gebieten, eine Wahrscheinlichkeit für eine Nicht-Befahrbarkeit von Gebieten und eine verbleibende Unsicherheit abbildet, bereitgestellt wird.

7. Einrichtung zum automatischen Steuern eines Fahrzeugs (48), die dazu ausgebildet ist, zur Bereitstellung einer Ausweichtrajektorie (80) des Fahrzeugs (48) vor einem Hindernis (78) Informationen über mindestens eine durch das Fahrzeug (48) frei befahrbare Fläche zu berücksichtigen,
**dadurch gekennzeichnet, dass**
die Einrichtung (50) dazu ausgebildet ist, Daten zum Erkennen von Hindernissen (78) in einem Umfeld (58) des Fahrzeugs (48) und Daten zum Erkennen von frei befahrbaren Flächen in dem Umfeld (58) gemeinsam zu verarbeiten, und somit die zum Ausweichen geeignete frei befahrbare Fläche zu bestimmen, und Daten nur zum Erkennen von Hindernissen (78) von mindestens einem ersten Sensor (52) des Fahrzeugs (48) und Daten zum expliziten Erkennen von frei befahrbaren Flächen von mindestens einem zweiten Sensor des Fahrzeugs (54) bereitzustellen, wobei das Fahrzeug (48) zum Ausweichen vor dem Hindernis (78) derart zu steuern ist, dass die Ausweichtrajektorie (80) des Fahrzeugs (48) durch die als frei befahrbar erkannte Fläche verläuft.

8. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung (50) nach Anspruch 7, ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung (50) nach Anspruch 7, ausgeführt wird.

## Claims

1. Method for automatically controlling a vehicle (48), in which method information about at least one area which can be freely travelled on by the vehicle (48) is taken into account in the provision of an avoidance trajectory (80) of the vehicle (48) before an obstacle (78),
**characterized in that**
data for detecting obstacles (78) in the surroundings (58) of the vehicle (48) and data for detecting areas which can be travelled on freely in the surroundings (58) are processed together, and the area which can be travelled on freely and which is suitable for avoidance is determined, and **in that** data is provided only for detecting obstacles (78) of at least one first sensor (52) of the vehicle (48), and data for specifically detecting areas which can be travelled on freely are detected by at least one second sensor of the vehicle (54), wherein the vehicle (48) is controlled for the purpose of avoidance before the obstacle (78) in such a way that the avoidance trajectory (80) of the vehicle (48) runs through the area which is detected as being capable of being travelled freely.

2. Method according to Claim 1, in which a trajectory which is travelled along by the vehicle (48) is projected cyclically.

3. Method according to Claim 2, which is carried out only when the vehicle (48) is heading towards a detected obstacle (78) on the projected trajectory, and the area which is detected as been capable of being freely travelled on can be travelled on.

4. Method according to one of the preceding claims, in which it is checked whether a person who is controlling the vehicle (48) can avoid the obstacle (78) by means of suitable control commands.

5. Method according to Claim 1, in which cell-grid based decomposition of the surroundings (58) is carried out.

6. Method according to one of the preceding claims, in which a description of the surroundings is made available which maps a probability of regions being capable of being travelled on, probability of regions not being capable of being travelled on and a remaining degree of uncertainty.

7. Device for automatically controlling a vehicle (48), which device is designed to take into account information about at least one area which can be freely travelled on by the vehicle (48) in providing an avoidance trajectory (80) of the vehicle (48) before an obstacle (78),
**characterized in that**
the device (50) is designed to process jointly data items for detecting obstacles (78) in the surroundings (58) of the vehicle (48) and data for detecting areas in the surroundings (58) which can be travelled on freely, and therefore to determine the area which can be travelled on freely and which is suitable for avoidance, and to provide data only for detecting obstacles (78) by means of at least one first sensor (52) of the vehicle (48) and data for specifically detecting area which can be freely travelled on by means of at least one secondary sensor of the vehicle (54), wherein the vehicle (48) is to be controlled for the purpose of avoidance before the obstacle (78) in such a way that the avoidance trajectory (80) of the vehicle (48) runs through the area that is detected as being capable of being freely travelled on.

8. Computer program with program code means for carrying out all the steps of a method according to one of Claims 1 to 6, when the computer program is executed on a computer or a corresponding computer unit, in particular in a device (50) according to Claim 7.

9. Computer program with program code means which are stored on a computer-readable data carrier in order to carry out all the steps of a method according to one of Claims 1 to 6 when the computer program is executed on a computer or a corresponding computer unit, in particular in a device (50) according to Claim 7.

## Revendications

1. Procédé de commande automatique d'un véhicule (48), dans lequel, pour conférer une trajectoire d'évitement (80) au véhicule (48) à l'avant d'un obstacle (78), des informations relatives à au moins une surface pouvant être parcourue librement par le véhicule (48) sont prises en compte,
**caractérisé en ce que** des données destinées à détecter des obstacles (78) dans un environnement (58) du véhicule (48) et des données destinées à détecter détecter des surfaces pouvant être parcourues librement dans l'environnement (58) sont traitées en commun et la surface pouvant être parcourue librement appropriée pour un évitement est ainsi déterminée, et **en ce que** des données uniquement destinées à détecter des obstacles (78) provenant d'au moins un premier capteur (52) du véhicule (48) et des données destinées à expliciter la détection de surfaces pouvant être parcourues librement provenant d'au moins un deuxième capteur du véhicule (54) sont fournies, dans lequel le véhicule (48) est commandé à des fins d'évitement à l'avant de l'obstacle (78) de manière à ce que la trajectoire d'évitement (80) du véhicule (48) passe par la surface détectée comme pouvant être parcourue librement.

2. Procédé selon la revendication 1, dans lequel une trajectoire qui est parcourue par le véhicule (48) est prédite de manière cyclique.

3. Procédé selon la revendication 2, qui n'est mis en oeuvre que lorsque le véhicule (48) est commandé, selon la trajectoire prédite, pour se diriger vers un obstacle détecté (78) et lorsqu'il est possible de s'écarter de la surface détectée comme pouvant être parcourue librement.

4. Procédé selon l'une quelconque des revendications précédentes, dans lequel il est vérifié si une personne qui commande le véhicule (48) peut éviter l'obstacle (78) par des instructions de commande appropriées.

5. Procédé selon la revendication 1, dans lequel une décomposition à base de maillage de l'environnement (58) est effectuée.

6. Procédé selon l'une quelconque des revendications précédentes, dans lequel il est fourni une description de l'environnement qui représente une probabilité que des zones puissent être parcourues, une probabilité que des zones puissent être parcourues, et une incertitude résiduelle.

7. Dispositif de commande automatique d'un véhicule (48), qui est conçu pour prendre en compte, afin de conférer au véhicule (48) une trajectoire d'évitement (80) à l'avant d'un obstacle (78), des informations relatives à au moins une surface pouvant être parcourue librement par le véhicule (48), **caractérisé en ce que** le dispositif (50) est conçu pour traiter en commun des données destinées à détecter des obstacles (78) dans un environnement (58) du véhicule (48) et des données destinées à détecter des surfaces pouvant être parcourues librement dans l'environnement (58) et ainsi déterminer la surface pouvant être parcourue librement appropriée pour l'évitement, et pour fournir des données uniquement destinées à détecter des obstacles (78) provenant d'au moins un premier capteur (52) du véhicule (48) et des données destinées à expliciter la détection de surfaces pouvant être parcourues librement provenant au moins un deuxième capteur du véhicule (54), dans lequel le véhicule (48) est commandé à des fins d'évitement de l'obstacle (78) de manière à ce que la trajectoire d'évitement (80) du véhicule (48) passe par la surface détectée comme pouvant être parcourue librement.

8. Programme informatique comportant des moyens à code de programme destinés à mettre en oeuvre toutes les étapes d'un procédé selon l'une quelconque des revendications 1 à 6 lorsque le programme informatique est exécuté sur un ordinateur ou une unité de calcul correspondante, notamment dans un dispositif (50) selon la revendication 7.

9. Produit de programme informatique comportant des moyens à code de programme qui sont stockés sur un support de données lisible par ordinateur afin de mettre en oeuvre toutes les étapes d'un procédé selon l'une quelconque des revendications 1 à 6 lorsque le programme informatique est exécuté sur un ordinateur ou une unité de calcul correspondante, notamment dans un dispositif (50) selon la revendication 7.
